# EUROPÄISCHE PATENTANMELDUNG

(11) **EP 4 781 827 A1**
(43) Veröffentlichungstag der Anmeldung: **29.07.2026**
(21) Anmeldenummer: 25153372.5
(22) Anmeldetag: 22.01.2025
(51) Int. Cl.: A01N 43/80, A01N 25/04, A01N 25/32

(54) **VERFAHREN ZUM HERSTELLEN VON 2-METHYLISOTHIAZOLIN-3-ON (MIT)-ARMEN WÄSSRIGEN ZUSAMMENSETZUNGEN**

(71) Anmelder: LANXESS Deutschland GmbH, 50569 Köln (DE)
(72) Erfinder: EFFING, Jochem, 51375 Leverkusen (DE); PACHER, Roman, 53757 Sankt Augustin (DE); LAMORATTA, Monika, 40764 Langenfeld (DE)

(57) **Zusammenfassung**

Die Erfindung betrifft ein Verfahren zur Herstellung einer wässrigen Zusammensetzung mit einem Gehalt an 2-Methyl-isothiazolin-3-on (MIT) von weniger als 1,5 ppm, dadurch gekennzeichnet, dass man eine Isothiazolinon-haltige wässrige Zusammensetzung mit einem Gehalt an dem Isothiazolinon 2-Methylisothiazolin-3-on (MIT) von wenigstens 1,5 ppm durch Zugabe von 3,6-Dioxa-1,8-octan-dithiol (DMDO) ggf. in Kombination mit einem oder mehreren Reduktionsmitteln behandelt, wobei auf 1 ppm in der wässrigen Zusammensetzung enthaltenden Isothiazolinons, wenigstens 2,5 ppm an DMDO und ggf. mitverwendetem Reduktionsmittel eingesetzt wird.

## Beschreibung

Die vorliegende Erfindung betrifft ein Verfahren zum Herstellen einer MIT-armen wässrigen Zusammensetzungen, wie eines Beschichtungsmittels, beispielsweise einer Farbe oder eines Putzes, mit einem Gehalt an 2-Methylisothiazolin-3-on (MIT) von kleiner als 1,5 ppm, dadurch gekennzeichnet, dass man eine Isothiazolinon-haltige, wässrige Zusammensetzung mit einem Gehalt an 2-Methylisothiazolin-3-on (MIT) von wenigstens 1,5 ppm durch Zugabe von 3,6-Dioxa-1,8-octan-dithiol (DMDO) ggf. in Kombination mit einem oder mehreren Reduktionsmitteln behandelt.

Konservierungsmittel werden in vielen wässrigen Systemen eingesetzt, um mikrobielles Wachstum zu bekämpfen. Ein wichtiges Anwendungsgebiet ist die Konservierung von Beschichtungsmitteln, wie Farben und Putzen, da diese dem mikrobiologischen Abbau unterliegen und verderben, wenn ihnen keine Konservierungsmittel zugesetzt werden.

Um eine langfristige Haltbarkeit der Beschichtungsmittel zu gewährleisten, wird deshalb der Großteil aller heute verfügbaren Beschichtungsmittel auf Wasserbasis für Innen- und Außenanstriche mit Konservierungsmitteln aus der Familie der Isothiazolinone versetzt.

Dass der Kontakt mit Isothiazolonen allergische Reaktionen auslösen kann, ist seit Jahren bekannt. Dabei weist das 5-Chlor-2-methyl-4-isothiazolon (CIT) das mit Abstand größte sensibilisierende Potenzial auf. Da dieses jedoch, verglichen mit dem 2-Methylisothiazolin-3-on (MIT) eine um bis zu 100-fach höhere antimikrobielle Wirksamkeit aufweist, findet dies noch immer Einsatz bei der Konservierung von Bestandteilen beispielsweise für Beschichtungsmittel, wie Farben oder Putzen. Ein wesentlicher Bestandteil von Farben bzw. Putzen ist das Bindemittel bzw. die Polymerdispersion, die vor der Herstellung des entsprechenden Beschichtungsmittels meist bereits das kostengünstige und hochwirksame 5-Chlor-2-methyl-4-isothiazolon zumeist in Kombination mit 2-Methylisothiazolin-3-on (MIT) in einer Menge im Bereich von 5 bis 20 ppm enthält. Dies führt dazu, dass ein Beschichtungsmittelhersteller bei der Verwendung einer solchen Polymerdispersion ein Beschichtungsmittel mit einem signifikanten Gehalt an 5-Chlor-2-methyl-4-isothiazolon aber auch 2-Methylisothiazolin-3-on (MIT) herstellt.

Aufgrund des vergleichsweise hohen sensibilisierenden Potentials des 5-Chlor-2-methyl-4-isothiazolons war es jedoch wünschenswert, dass dies in möglichst geringen Mengen, in einem Bereich von 0 bis 1 ppm, in Beschichtungsmitteln enthalten ist.

In der WO2015/082063 wurde daher versucht, das CIT in Gegenwart von MIT und BIT selektiv mit geeigneten Zerstörern wie Cystein zu reduzieren.

Mittlerweile sind jedoch auch 2-Methylisothiazolin-3-on (MIT) haltige Beschichtungsmittel für den Endverbraucher nicht mehr erwünscht. Somit wäre es wünschenswert, auch das Isothiazolinon 2-Methylisothiazolin-3-on (MIT) bei dem Übergang vom industriellen Einsatz zum Einsatz beim Endanwender effektiver zu zerstören.

Die aus WO2015/082063 bekannten CIT-Zerstörer wie Cystein haben zudem den Nachteil MIT nur in sehr geringem Masse zu zerstören.

Aufgabe der vorliegenden Erfindung war es daher, den Gehalt einer wässrigen Zusammensetzung an 2-Methylisothiazolin-3-on (MIT) von wenigstens 1,5 ppm auf weniger als 1,5 ppm, bevorzugt auf weniger als 1,0 ppm, insbesondere auf weniger als 0,8 ppm effektiver zu reduzieren.

Die Erfindung betrifft daher ein Verfahren zur Herstellung einer wässrigen Zusammensetzung mit einem Gehalt an 2-Methyl-isothiazolin-3-on (MIT) von weniger als 1,5 ppm, dadurch gekennzeichnet, dass man eine Isothiazolinon-haltige, wässrige Zusammensetzung mit einem Gehalt an dem Isothiazolinon 2-Methylisothiazolin-3-on (MIT) von wenigstens 1,5 ppm durch Zugabe von 3,6-Dioxa-1,8-octan-dithiol (DMDO) ggf. in Kombination mit einem oder mehreren Reduktionsmitteln behandelt, wobei auf 1 ppm in der wässrigen Zusammensetzung enthaltenden Isothiazolinons, wenigstens 2,5 ppm an DMDO und ggf. mitverwendetem Reduktionsmittel eingesetzt wird.

### Wässrige Zusammensetzungen

Grundsätzlich kommen als wässrige Zusammensetzungen, die als Isothiazolinon wenigstens 2-Methylisothiazolin-3-on (MIT) enthalten und dessen Menge reduziert werden soll, alle möglichen in Frage.

Bevorzugte wässrige Zusammensetzungen sind wässrige Lösungen, Emulsionen, Suspensionen oder Dispersionen.

Als bevorzugte wässrige Suspensionen kommen beispielsweise mineralische Suspensionen in Frage. Mineralische Suspensionen, auch Aufschlämmungen oder Slurries genannt, enthalten als mineralische Basis vorzugsweise Calciumcarbonat, Titandioxid oder andere mineralische Füllstoffe oder Pigmente. Sie sind häufig wesentliche Rohstoffe zur Herstellung von Dispersionsfarben als auch von Papier. Die mineralischen Stoffe werden dazu vorzugsweise fein vermahlen und in Wasser mit dispergiert. Gegen mikrobiellen Verfall werden solche wässrigen Zusammensetzungen beispielsweise mit einer CMIT/MIT-Biozidmischung konserviert.

Als bevorzugte wässrige Dispersionen kommen beispielsweise Polymerdispersionen, insbesondere solche, deren Polymere natürlichen Ursprung sind wie Naturlatex des Gummibaumes, Stärke oder Casein sowie solche, deren Polymere synthetisch durch Polymerisation von einem oder mehreren Monomeren wie beispielsweise Styrol, Akrylsäure und Vinylacetat zum Beispiel mittels Emulsions- oder Suspensionspolymerisation hergestellt werden können aber auch Polyalkylenglykole.

Ebenfalls sind solche wässrigen Zusammensetzungen bevorzugt, die Polymerdispersionen enthalten bzw. auf Basis von Polymerdispersionen hergestellt werden. Als solche sind insbesondere Beschichtungsmittel wie Farben zum Beispiel Dispersionsfarben oder Putze sowie Klebstoffe zu nennen.

Bevorzugt sind auch wässrige Zusammensetzungen auf Basis von Tensiden und ggf. wasserlöslichen Polymeren (z.B. Polyalkylenglykolen) wie sie in den Bereichen der Reinigungsmittel, Toilettenartikel, kosmetischen Produkte sowie in Prozessflüssigkeiten bei der Papierverarbeitung, Textilfertigung, Lederherstellung und in der Metallbearbeitung eingesetzt werden.

Bevorzugte Polymerdispersionen weisen Polymerpartikel in einer wässrigen Phase auf, wobei die Größe der Polymerpartikel typischerweise von 20 Nanometer bis 200 Mikrometern liegt. Die kolloidale Stabilität der Dispersion wird meistens durch grenzflächenaktive Stoffe, wie Tenside oder Schutzkolloide erzielt.

Polymerdispersionen sind empfänglich für mikrobiellen Befall und werden daher häufig mit dem CIT/MIT-Biozidgemisch konserviert.

Polymerdispersionen bilden auch eine Grundlage für viele Klebstoffe. Dazu werden die Polymerdispersionen gegebenenfalls noch mit Zusätzen wie Weichmachern, Verdicker und Füllstoffen versetzt. Verwendung finden diese Klebstoffe unter anderem in Selbstklebeetiketten, als Fliesenkleber und in Holzleimen.

Wässrige Tensidlösungen oder -emulsionen finden üblicherweise als Reinigungs- und Waschmittel verbreitete Anwendung. Dazu werden die Tensidlösungen oder -emulsionen gegebenenfalls noch mit Zusätzen wie beispielsweise Farb- und Duftstoffen, Verdicker, Netzmittel und pH-Regulatoren versetzt.

Bevorzugte Beschichtungsmittel sind wasserbasierte Farben und Putze. Die Farbe kann dabei eine Farbe für den Innenbereich oder den Außenbereich sein. Der Putz kann ebenfalls ein

Putz für den Außenbereich wie auch den Innenbereich sein. Gemäß einer bevorzugten Ausführungsform der Erfindung handelt es sich bei dem Beschichtungsmittel um eine Farbe mit einem pH- Wert im Bereich von 7,5 bis 10, bevorzugt um eine Farbe mit einem pH- Wert im Bereich von 7,5 bis 9,0. Gemäß einer bevorzugten Ausführungsform der Erfindung handelt es sich bei dem Beschichtungsmittel um einen Putz mit einem pH- Wert im Bereich von 8 bis 11, bevorzugt um eine Farbe mit einem pH-Wert im Bereich von 8,5 bis 10,5.

Weitere Bestandteile der wässrigen Zusammensetzung, insbesondere des bevorzugten Beschichtungsmittels können sein Wasser, Bindemittel, beispielsweise in Form von Polymerdispersionen, Pigmente, Netzmittel, Verdicker, Tixotropiermittel, pH regulierende Verbindungen, Füllstoffe und Dispergiermittel.

Sofern die wässrige Zusammensetzung ein Beschichtungsmittel ist, kann das 2-Methyl-isothiazolin-3-on (MIT) und ggf. weitere Isothiazolinone dem fertigen Beschichtungsmittel zugegeben werden, vorzugsweise erfolgt die Zugabe aber über entsprechend mit 2-Methylisothiazolin-3-on (MIT) und ggf. weiteren Isothiazolinonen stabilisierten Inhaltsstoffe des Beschichtungsmittels, insbesondere vorzugsweise verwendeter Polymerdispersionen.

Neben dem 2-Methylisothiazolin-3-on (MIT) kann die wässrige Zusammensetzung, insbesondere die Polymerdispersion oder das Beschichtungsmittel auch andere Isothiazolinone, insbesondere das 5-Chlor-2-methyl-4-isothiazolons (CIT), und 2-n-Octylisothiazolin-3-on (OIT) enthalten. Auch diese, vorzugsweise das CIT werden von dem 3,6-dioxa-1,8-octan-dithiol (DMDO)-haltigen Mittel ebenfalls mitzerstört. Bei Vorliegen weiterer Isothiazolinone wird der Anteil an DMDO ggf. in Kombination mit einem oder mehreren Reduktionsmitteln vorzugsweise erhöht.

Üblicherweise enthält die erfindungsgemäß zu behandelnde wässrige Zusammensetzung, insbesondere die Polymerdispersion oder das Beschichtungsmittel einen Anteil an MIT von 2 bis 20 ppm, vorzugsweise von 4 bis 15 ppm und bevorzugt einen Anteil an Isothiazolinonen insgesamt von10 bis 100 ppm, vorzugsweise von 10 bis 50 ppm.

Bevorzugt enthält die erfindungsgemäß zu behandelnde wässrige Zusammensetzung Isothiazolinone, die in Summe zu mehr als 95 Gew.-%, vorzugsweise mehr als 99 Gew.-% aus MIT und ggf. 5-Chlor-2-methyl-4-isothiazolon (CIT) bestehen.

Das erfindungsgemäße Verfahren führt vorzuzugsweise zu wässrigen Zusammensetzungen, insbesondere zu Beschichtungsmitteln mit einen Anteil an MIT von kleiner als 1 ppm, insbesondere kleiner 0,8 ppm.

### 3,6-Dioxa-1,8-octan-dithiol (DMDO)

Bevorzugt wird auf 1 ppm pro in der wässrigen Zusammensetzung, vorzugsweise in der Polymerdispersion oder im Beschichtungsmittel enthaltenden Isothiazolinons, wenigstens 2,5 ppm, insbesondere wenigstens 2,8 ppm, vorzugsweise 2,5 bis 200 ppm an 3,6-Dioxa-1,8-octan-dithiol (DMDO) und ggf. mitverwendetem Reduktionsmittel eingesetzt. Die Einsatzmengen beziehen sich daher immer auf die Summe von DMDO und ggf. mitverwendetem Reduktionsmittel. Damit kann bereits eine deutliche Reduzierung des MIT Anteils auf weniger als 1,5 ppm erreicht werden.

DMDO ggf. in Kombination mit einem Reduktionsmittel, die ebenfalls als solche Formulierung Gegenstand der Erfindung ist, kann als solche, vorzugsweise aber in Form einer wässrigen Formulierung eingesetzt werden. Beides wird nachfolgend beschrieben. Bevorzugt werden die erfindungsgemäßen Formulierungen in das erfindungsgemäße Verfahren eingesetzt.

Bevorzugt wird DMDO als wässrige Zusammensetzung eingesetzt mit einem DMDO Anteil von 0,5 bis 5 Gew.-%.

Weiterhin kann das DMDO in Form einer wässrigen Lösung eingesetzt werden, die wenigstens einen Emulgator und/oder wenigstens ein Antioxidationsmittel, wie vorzugsweise Ascorbinsäure und /oder wenigstens einen Entschäumer, wie vorzugsweise Hexylalkohol enthält. Eine weitere Beschreibung der DMDO Darreichung erfolgt unter der erfindungsgemäßen Formulierung weiter unten.

### Kombination:

Besonders bevorzugt ist es, DMDO in Kombination mit wenigstens einem Reduktionsmittel einzusetzen. Für diesen Fall werden auf 1 ppm pro in der wässrigen Zusammensetzung, vorzugsweise in der Polymerdispersion oder im Beschichtungsmittel enthaltenden Isothiazolinons vorzugsweise 2,5 ppm, insbesondere wenigstens 2,8 ppm, vorzugsweise 2,5 bis 200 ppm einer solchen Kombination eingesetzt. Als Reduktionsmittel kommen insbesondere solche ausgewählt aus der Reihe Natriumbisulfit (NaHSO₃), Natriummetabisulfit (Na₂S₂O₅), Natriumsulfit (Na₂SO₃) und Natriumthiosulfat (Na₂S₂O₃) in Frage.

Ganz besonders bevorzugt ist es, DMDO in Kombination mit dem Reduktionsmittel Natriumbisulfit einzusetzen.

Besonders bevorzugt ist es, dass 3,6-Dioxa-1,8-octan-dithiol (DMDO) zum Reduktionsmittel, insbesondere zu Natriumbisulfit, Natriummetabisulfit, Natriumsulfit und/oder Natriumthiosulfat, in einem Gewichtsverhältnis von 5:1 bis 1:5, vorzugsweise von 3:1 bis 1:3, insbesondere 2,5:1 bis 1:2,5 einzusetzen.

### DMDO + Reduktionsmittel Formulierung

Die Erfindung betrifft auch eine Formulierung enthaltend 3,6-Dioxa-1,8-octan-dithiol (DMDO) und wenigstens ein Reduktionsmittel, vorzugsweise wenigstens eines ausgewählt aus der Reihe Natriumbisulfit, Natriummetabisulfit, Natriumsulfit und Natriumthiosulfat.

Bevorzugt enthält die erfindungsgemäße Formulierung 3,6-Dioxa-1,8-octan-dithiol (DMDO) und Natriumbisulfit, besonders bevorzugt besteht die Kombination aus DMDO und Reduktionsmittel in der erfindungsgemäßen Formulierung in Summe zu mehr als 95 Gew.-%, vorzugsweise mehr als 99 Gew.-% aus DMDO und Natriumbisulfit.

Die erfindungsgemäße Formulierung enthält insbesondere 3,6-Dioxa-1,8-octan-dithiol (DMDO) in einer Menge von 0,5 bis 5 Gew.-%, bezogen auf die Formulierung.

In einer weiteren Vorzugsform ist die erfindungsgemäße Formulierung dadurch gekennzeichnet, dass sie DMDO und Na-Bisulfit in einem Gewichtsverhältnis von 5:1 bis 1:5, vorzugsweise von 3:1 bis 1:3, insbesondere von 2,5:1 bis 1:2,5 enthält.

Besonders bevorzugt enthält die erfindungsgemäße Formulierung DMDO und das Reduktionsmittel, insbesondere Na-Bisulfit in Summe in einer Menge von 1 bis 6 Gew.-%, bezogen auf die Formulierung.

Weiterhin bevorzugt ist es, dass die erfindungsgemäße Formulierung eine wässrige Formulierung ist.

Bevorzugt enthält die erfindungsgemäße Formulierung wenigstens einen Emulgatur und/oder wenigstens ein Antioxidationsmittel, wie vorzugsweise Ascorbinsäure und /oder wenigstens einen Entschäumer, wie vorzugsweise Hexylalkohol. Auch weitere organische Lösungsmittel wie C1-C4-Alkohole, insbesondere Ethanol können mitverwendet werden.

Die Emulgatoren sind bevorzugt ausgewählt aus der Gruppe, bestehend aus Fettalkolethoxylaten, Fettalhokoholethersulfaten, Alkylsulfaten, Blockcopolymere auf Basis von Ethylen- und Propylenoxid, Tristyrylphonolethoxylaten, Tristyrylphonolethoxylatesulfaten und Polysorbaten.

Als Antioxidantien werden bevorzugt Substanzen ausgewählt aus der Gruppe, bestehend aus Ascorbinsäure und Ascorbinsäuresalzen.

Die Entschäumer sind bevorzugt ausgewählt aus der Gruppe, bestehend aus Hexylalkohol, Heptylalkohol, Monoglyceriden, Diglyceriden und Tributylphosphaten.

Bevorzugt enthält die Zusammensetzung weiterhin wenigstens ein Reduktionsmittel von 0,5 bis 5 Gew.%. Als bevorzugte Reduktionsmittel sind die oben genannten auch hier zu nennen und auch das Verhältnis von DMDO zu Reduktionsmittel entspricht dem oben für das erfindungsgemäße Verfahren genannte.

Bevorzugt werden die erfindungsgemäße Formulierung in das erfindungsgemäße Verfahren eingesetzt.

Von der erfindungsgemäßen Formulierung werden der wässrigen Zusammensetzung, vorzugsweise der Polymerdispersion oder dem Beschichtungsmittel so viel zugesetzt, dass pro 1 ppm in der wässrigen Zusammensetzung, vorzugsweise im Beschichtungsmittel oder der der Polymerdispersion enthaltenden Isothiazolinons bevorzugt 2 bis 5 ppm an DMDO und dem mitverwendetem Reduktionsmittel entfallen.

Bei dem erfindungsgemäßen Verfahren wird das 2-Methyl-isothiazol-3-on (MIT) aber auch das ggf. mit enthaltende 5-Chlor-2-methyl-4-isothiazolon vorzugsweise innerhalb eines Zeitraums von bis zu 24 Stunden, bevorzugt innerhalb eines Zeitraums von 0,5 bis 12 Stunden, besonders bevorzugt innerhalb eines Zeitraums von 2 bis 6 Stunden, zersetzt beziehungsweise abgebaut, so dass nach diesem Zeitraum insbesondere innerhalb von 24 h der Gehalt an MIT, vorzugsweise aber auch von 5-Chlor-2-methyl-4-isothiazolon (CIT), bezogen auf die hergestellte wässrige Zusammensetzung, insbesondere das hergestellte Beschichtungsmittel oder die Polymerdispersion jeweils kleiner 1,5 ppm, insbesondere kleiner 1 ppm, bevorzugt im Bereich kleiner 0,8 ppm, besonders bevorzugt im Bereich von 0 bis 0,2 ppm liegt. Innerhalb eines Zeitraums von bis zu 24 Stunden bedeutet dabei, dass das gesamte MIT und ggf. anwesendes 5-Chlor-2-methyl-4-isothiazolon (CIT), innerhalb von 24 Stunden ab dem Zeitpunkt des Kontakts mit DMDO ggf. in Kombination mit wenigstens einem Reduktionsmittel entsprechend zersetzt wird, so das der Gesamtgehalt an MIT und ggf. anwesendem 5-Chlor-2-methyl-4-isothiazolon (CIT) nach diesen 24 Stunden im Bereich von 0 bis 1 ppm, bezogen auf die hergestellte wässrige Zusammensetzung, insbesondere das hergestellte Beschichtungsmittel oder die Polymerdispersion, liegt.

Durch die Zersetzung des MIT und ggf. anwesendem 5-Chlor-2-methyl-4-isothiazolons (CIT) wäre die hergestellte wässrige Zusammensetzung, insbesondere das hergestellte Beschichtungsmittel nahezu frei von Konservierungsmitteln, und würde ab dann dem mikrobiologischen Abbau unterliegen und ggf. verderben können. Es ist daher bevorzugt, wenn ihm neue Konservierungsmittel zugesetzt werden. Daher wird im Rahmen des erfindungsgemäßen Verfahrens vorzugsweise im Anschluss an die MIT Zerstörung vorzugsweise wenigstens ein Konservierungsmittel ausgewählt aus der Gruppe bestehend aus 1,2-Benzisothiazolin-3-on (BIT), N-Methyl-1,2-benzisothiazolin-3-on (M-BIT), 2-n-Octylisothiazolin-3-on (OIT), Bronopol, Phenoxyethanol, Natrium-Pyrithion und Zink-Pyrithion hinzugegeben.

Die Anwendungskonzentrationen der im Anschluss an die MIT Zerstörung hinzugegebenen Konservierungsmittel liegen, bezogen auf alle hinzugegebenen Konservierungsmittel, üblicherweise im Bereich von 10 bis 1000 ppm, bevorzugt im Bereich von 20 bis 500 ppm, und insbesondere bevorzugt im Bereich von 30 bis 200 ppm, bezogen auf deren Konzentration in der zu stabilisierenden wässrigen Zusammensetzung, insbesondere dem zu stabilisierenden Beschichtungsmittel.

Gemäß einer bevorzugten Ausführungsform der Erfindung wird im Anschluss an die MIT Zerstörung 1,2-Benzisothiazolin-3-on (BIT) als Konservierungsmittel hinzugegeben. Im Rahmen der Erfindung hat sich überraschenderweise herausgestellt, dass das 1,2-Benzisothiazolin-3-on (BIT) durch DMDO und dem ggf. mitverwendetem Reduktionsmittel lediglich in geringem Masse zersetzt bzw. abgebaut wird. So wurde festgestellt, dass das im Anschluss an die MIT Zerstörung hinzugegebene 1,2-Benzisothiazolin-3-on (BIT) über einen Zeitraum von 24 Stunden zu weniger als 10 Gew.-%, bevorzugt zu weniger als 5 Gew.-% von dem DMDO bzw. dem ggf. mitverwendetem Reduktionsmittel zersetzt bzw. abgebaut wird.

Die folgenden Beispiele dienen zur weiteren Veranschaulichung der vorliegenden Erfindung.

### Beispiele

### 1. Vergleichsbeispiel

Vergleichende Studien zum Abbau von MIT in wässriger Lösung zeigen, dass mit Cystein selbst bei 4-fachem Gewichtsüberschuss der MIT-Gehalt nicht unter 1,5pmm reduziert werden kann. Im Gegensatz dazu wird schon bei einem 2-fachen Überschuss von DMDO der MIT-Gehalt bereits unter 1,5 ppm gedrückt. Tabelle 1 zeigt die Analytik der MIT Anteile nach verschiedenen Behandlungszeiten (24 Stunden, 72 Stunden und 7 Tage) des erfindungsgemäßen Verfahrens.

In diesem Experiment wurden wässrige Lösungen mit einem Gehalt von 4,9 ppm MIT mit wässrigen Lösungen von Cystein (1,5% Cystein in Wasser) bzw. DMDO (1,5% DMDO in einem Wasser/Ethanol-Gemisch (9:1)) derart versetzt, dass bezogen auf das MIT folgende Gewichtsequivalente an Cystein bzw. DMDO vorlagen: 1-fach, 2-fach, 3-fach und 4-fach. Als Referenz wurde immer der MIT-Gehalt der MIT-Lösung ohne Zusatz an Cystein- bzw. DMDO-Lösung in den Gehaltsbestimmungen zu den jeweiligen Zeitpunkten mitbestimmt.

**Tabelle 1:**

| | | **MIT 1.5 % DMDO** | **MIT 1.5 % CYS** |
|---|---|---|---|
| | **Masseequivalent Abbaureagenz zu MIT** | **MIT [ppm]** | **MIT[ppm]** |
| | | **24h** | **24h** |
| 24h | 0x | 4,9 | 4,9 |
| 24h | 1x | 2,5 | 3,6 |
| 24h | 2x | 1,3 | 2,8 |
| 24h | 3x | 0,8 | 2,2 |
| 24h | 4x | 0,6 | 1,8 |
| | | | |

| | | **72h** | **72h** |
|---|---|---|---|
| 72h | 0x | 4,9 | 4,9 |
| 72h | 1x | 2,3 | 3,6 |
| 72h | 2x | 1,2 | 2,8 |
| 72h | 3x | 0,7 | 2,2 |
| 72h | 4x | 0,5 | 1,7 |
| | | | |

| | | **7d** | **7d** |
|---|---|---|---|
| 7d | | 4,9 | 4,9 |
| 7d | 1x | 2,4 | 3,7 |
| 7d | 2x | 1,2 | 2,8 |
| 7d | 3x | 0,7 | 2,1 |
| 7d | 4x | 0,5 | 1,6 |

### 2. Herstellung einer Dispersionsfarbe

### 2.1 Polymerdispersion

Die Herstellung einer Dispersionsfarbe auf Basis einer Ethylen-Vinylacetat (kurz: EVA)-Polymerdispersion erfolgte durch Mischen einer 53% wässrigen Polymerdispersion, die mit 45 ppm einer CMIT/MIT Mischung (11ppm MIT und 34ppm CMIT) konserviert wurde, mit einer Farbpaste aus Pigmenten, Füllstoffen, Netz- und Dispergiermitteln, Rheologieadditiven und Wasser.

Die 53% wässrige **Polymerdispersion** wurde durch Dispergieren von 530g Nexiva^{®} CT 115 (Vinylacetat-Ethylen-Copolymer in Pulverform) in 470g Wasser hergestellt. Das pulverförmige Nexiva^{®} CT 115 wurde dazu mit Hilfe eines Dispermaten bei Raumtemperatur unter Rühren in dem Wasser dispergiert.

Die entstandene Polymerdispersion wurde mit 30g 10%iger 30g einer 0,15% CMIT/MIT-Lösung (MIT:CMIT = 11:34) (entspricht 45ppm CMIT/MIT in der Dispersion) konserviert.

### 2.2 Farbpaste

Die **Farbpaste** wurde durch Mischen von 3g Methylhydroxycellulose (Tylose^{®} MH 30.000 YG8, 0,5g Natriumpolyphosphat (Calgon^{®} N), 3,5g Polyakrylsäure-Kaliumsalz (40% in Wasser) (Lopon^{®} 859), 2g Entschäumer (Agitan^{®} 281), 90g Titandioxid (Kronos^{®} 2044), 20g Talcum (Polywhite B), 175g Calciumcarbonat d50 ~2.5µm und 135g Calciumcarbonat d50~5µm in 240g Wasser hergestellt. Nach vollständiger Durchmischung wurde die Paste durch Zugabe von 2g Natronlauge (20%) auf einen pH-Wert von 8 eingestellt.

### 2.3 Dispersionsfarbe

Zur Herstellung der **Dispersionsfarbe** wurden dann 330g der Polymerdispersion mit 670g der Farbpaste vermischt.

Die erhaltene Farbe hatte einen Gehalt an CIT/MIT von 14ppm (4ppm MIT und 10ppm CIT) und einen pH-Wert von 8.

### 3. MIT Abbaureagentien

### 3.1 DMDO-Lösung (Abbaureagenz A1)

Eine 1,5% DMDO-Lösung in Wasser wurde durch intensives Mischen der Komponenten Wasser, DMDO, Laurylethersulfat (Emulgator =Genapol LRO liq.), Entschäumer (Hexylalkohol) und Stabilisator (Ascorbinsäure) hergestellt.

**Tabelle 2: Zusammensetzung des Abbaureagenz A1 (DMDO)**

| **Gehalt in %** | **Komponente** | **CAS-Nr.** | **Bemerkung** | **Supplier** |
|---|---|---|---|---|
| 1,5 | DMDO | 14970-87-7 | | Arkema |
| 1,1 | Laurylethersulfat | 68891-38-3 | Als ~27% wässrige Lsg.; 4% Genapol LRO liq. | Clariant |
| 0,2 | Hexylalkohol | 111-27-3 | | Sasol |
| 0,1 | Ascorbinsäure | 50-81-7 | | DSM |
| 97,1 | Wasser | 7732-18-5 | | |

### 3.2 DMDO/Na-Bisulfit-Lösung (Abbaureagenz A2)

Eine DMDO/Na-Bisulfit-Lösung (1:1 Masseverhältnis) in Wasser wurde durch intensives Mischen der Komponenten Wasser, DMDO, Natriumbisulfitlösung, Laurylethersulfat (Emulgator = Genapol LRO liq), Entschäumer (Hexylalkohol) und Stabilisator (Ascorbinsäure) hergestellt.

**Tabelle 3: Zusammensetzung des Abbaureagenz A2 (DMDO:Na-Bisulfit = 1:1)**

| **Gehalt in %** | **Komponente** | **CAS-Nr.** | **Supplier** |
|---|---|---|---|
| 0,75 | DMDO | 14970-87-7 | Arkema |
| 0,75 | Natriumbisulfit | 7631-90-5 | |
| 1,1 | Laurylethersulfat | 68891-38-3 | Clariant |
| 0,2 | Hexylalkohol | 111-27-3 | Sasol |
| 0,1 | Ascorbinsäure | 50-81-7 | DSM |
| 97,1 | Wasser | 7732-18-5 | |

### 3.3 DMDO/Na-Bisulfit-Lösung (Abbaureagenz A3)

Eine DMDO/Na-Bisulfit-Lösung (1:0,5 Masseverhältnis) in Wasser wurde durch intensives Mischen der Komponenten Wasser, DMDO, Natriumbisulfitlösung, Laurylethersulfat (Emulgator = Genapol LRO liq), Entschäumer (Hexylalkohol) und Stabilisator (Ascorbinsäure) hergestellt.

**Tabelle 4: Zusammensetzung des Abbaureagenz A3 (DMDO:Bisulfit = 2:1)**

| **Gehalt in %** | **Komponente** | CAS-Nr. | **Supplier** |
|---|---|---|---|
| 1,0 | DMDO | 14970-87-7 | Arkema |
| 0,5 | Natriumbisulfit | 7631-90-5 | |
| 1,1 | Laurylethersulfat | 68891-38-3 | Clariant |
| 0,2 | Hexylalkohol | 111-27-3 | Sasol |
| 0,1 | Ascorbinsäure | 50-81-7 | DSM |
| 97,1 | Wasser | 7732-18-5 | |

### 3.4 DMDO-Lösung (Abbaureagenz B1)

Eine Lösung von DMDO wurde durch Mischen von 1,5 g DMDO mit 10g Ethanol und 88,5g Wasser hergestellt.

**Tabelle 5: Zusammensetzung des Abbaureagenz B1**

| **Gehalt in %** | **Komponente** | **CAS-Nr.** | **Supplier** |
|---|---|---|---|
| 1,5 | DMDO | 14970-87-7 | Arkema |
| 88,5 | Wasser | 7732-18-5 | |
| 10 | Ethanol | 64-17-5 | |

### 3.5 DMDO/Natrium-Bisulfit-Lösung (Abbaureagenz B2)

Eine 1.5% DMDO/Natrium-Bisulfitmischung (1:1 Verhältnis) wurde durch Mischen von 0,75g DMDO und 1,94g einer 39% Natrium-Bisulfitlösung mit 87,3g Wasser und 10g Ethanol hergestellt.

**Tabelle 6: Zusammensetzung des Abbaureagenz B2 (DMDO:Na-Bisulfit = 1:1)**

| **Gehalt in %** | **Komponente** | **CAS-Nr.** | **Supplier** |
|---|---|---|---|
| 0,75 | DMDO | 14970-87-7 | Arkema |
| 0,75 | Natriumbisulfit | 7631-90-5 | |
| 88,5 | Wasser | 7732-18-5 | |
| 10 | Ethanol | 64-17-5 | |

### 3.6 DMDO/Natrium-Bisulfit-Lösung (Abbaureagenz B3)

Eine 1.5% DMDO/Natrium-Bisulfitmischung (2:1 Verhältnis) wurde durch Mischen von 1,0g DMDO und 1,3g einer 39% Natrium-Bisulfitlösung mit 87,7g Wasser und 10g Ethanol hergestellt.

**Tabelle 7: Zusammensetzung des Abbaureagenz B3 (DMDO:Na-Bisulfit = 2:1)**

| **Gehalt in %** | **Komponente** | **CAS-Nr.** | **Supplier** |
|---|---|---|---|
| 1,0 | DMDO | 14970-87-7 | |
| 0,5 | Natriumbisulfit | 7631-90-5 | |
| 88,5 | Wasser | 7732-18-5 | |
| 10 | Ethanol | 64-17-5 | |

### 3.7 Cystein-Lösung (Abbaureagenz C1)

Eine Lösung von Cystein wurde durch Mischen von 1,5 g Cystein mit 10g Ethanol und 88,5g Wasser hergestellt.

**Tabelle 8: Zusammensetzung des Abbaureagenz C1**

| **Gehalt in %** | **Komponente** | **CAS-Nr.** | **Supplier** |
|---|---|---|---|
| 1,5 | Cystein | 3374-22-9 | |
| 88,5 | Wasser | 7732-18-5 | |
| 10 | Ethanol | 64-17-5 | |

### 3.8 Cystein/Natrium-Bisulfit-Lösung (Abbaureagenz C3)

Eine 1.5% Cystein/Natrium-Bisulfitmischung (1:1 Verhältnis) wurde durch Mischen von 1,0g Cystein und 1,3g einer 39% Natrium-Bisulfitlösung mit 87,3g Wasser und 10g Ethanol hergestellt.

**Tabelle 9: Zusammensetzung des Abbaureagenz C3 (Cystein:Bisulfit = 2:1)**

| **Gehalt in %** | **Komponente** | **CAS-Nr.** | **Supplier** |
|---|---|---|---|
| 1,0 | Cystein | 3374-22-9 | |
| 0,5 | Natriumbisulfit | 7631-90-5 | |
| 88,5 | Wasser | 7732-18-5 | |
| 10 | Ethanol | 64-17-5 | |

### Beispiel 1: Abbau von CIT und MIT in einer Dispersionsfarbe durch Zugabe von DMDO haltigen Lösungen

In jeweils 100g der oben beschriebenen Dispersionsfarbe wurden jeweils 0,38g und 0,51 g der Abbaureagenzien unter Rühren hinzu gegeben. Dies entspricht einem Masseverhältnis von CIT/MIT zu (DMDO/Na-Bisulfit) von 1:3 bzw. 1:4.

Nach 24 Stunden, 72 Stunden und 7 Tagen wurde der Gehalt an CIT und MIT mittel HPLC bestimmt. Als Ausgangswert wurde der Gehalt an CIT und MIT der Farbe vor Zugabe der Abbaureagenzien bestimmt. Zur Referenz wurde auch der CIT und MIT-Gehalt der Farbe, der keine Abbaureagenzien zugesetzt wurden, zu den einzelnen Zeitpunkten bestimmt.

**Tabelle 10: Abbau von CIT und MIT in einer Dispersionsfarbe durch Zugabe der Abbaureagenzien A1-A3 im 3-fachen Überschuss**

| **Abbaureagenz** | **CIT-Gehalt in ppm** | | | | **MIT-Gehalt in ppm** | | | |
|---|---|---|---|---|---|---|---|---|
| | **Start** | **24h** | **72h** | **7d** | **Start** | **24h** | **72h** | **7d** |
| Referenz | 8,8 | 8,8 | 8,7 | 7,4 | 3,8 | 3,8 | 3,4 | 3,4 |
| A1 | | <0,1 | <0,1 | <0,1 | | 0,1 | 0,7 | 0,8 |
| A2 | | <0,1 | <0,1 | <0,1 | | 0,5 | 1,0 | 1,0 |
| A3 | | <0,1 | <0,1 | <0,1 | | 0,2 | 0,7 | 0,8 |

Ein 3-facher Überschuß an den Abbaureagenzien, bezogen auf den CIT und MIT Gesamtgehalt, führt bei allen Abbaureagenzien (A1-A3) zu einem MIT-Abbau auf einen Gehalt von unter 1,5ppm aus.

Nach 24 Stunden, 72 Stunden und 7 Tagen wurde der Gehalt an CIT und MIT mittel HPLC bestimmt. Als Ausgangswert wurde der Gehalt an CIT und MIT der Farbe vor Zugabe der Abbaureagenzien bestimmt. Zur Referenz wurde auch der CIT und MIT-Gehalt der Farbe, der keine Abbaureagenzien zugesetzt wurden, zu den einzelnen Zeitpunkten bestimmt.

**Tabelle 11: Abbau von CIT und MIT in einer Dispersionsfarbe durch Zugabe der Abbaureagenzien A1-A3 im 4-fachen Überschuss**

| **Abbaureagenz** | **CIT-Gehalt in ppm** | | | | **MIT-Gehalt in ppm** | | | |
|---|---|---|---|---|---|---|---|---|
| | **Start** | **24h** | **72h** | **7d** | **Start** | **24h** | **72h** | **7d** |
| Referenz | 11,5 | 11,5 | 9,8 | 9,3 | 4,8 | 4,8 | 4,4 | 4,4 |
| A1 | | <0,1 | <0,1 | <0,1 | | 0,1 | 0,2 | 0,1 |
| A2 | | <0,1 | <0,1 | <0,1 | | 0,2 | 0,6 | 0,6 |
| A3 | | <0,1 | <0,1 | <0,1 | | 0,2 | 0,3 | 0,1 |

Ein 4-facher Überschuß an den Abbaureagenzien, bezogen auf den CIT und MIT Gesamtgehalt, führt bei allen Abbaureagenzien (A1-A3) zu einem MIT-Abbau auf einen Gehalt von unter 0,8 ppm aus.

### Beispiel 2A: Abbau von CIT und MIT in einer Dispersionsfarbe durch Zugabe von DMDO und Na-Bisulfit Lösungen

In jeweils 100g der Dispersionsfarbe wurden 0,3g und 0,4g der Abbaureagenzien B1-B3 unter Rühren hinzu gegeben. Dies entspricht einem Masseverhältnis von CIT/MIT zu (DMDO/Na-Bisulfit) von 1:3 bzw. 1:4.

Nach 24 Stunden, 72 Stunden und 7 Tagen wurde der Gehalt an CIT und MIT mittel HPLC bestimmt. Als Ausgangswert wurde der Gehalt an CIT und MIT der Farbe vor Zugabe der Abbaureagenzien bestimmt. Zur Referenz wurde auch der CIT und MIT-Gehalt der Farbe, der keine Abbaureagenzien zugesetzt wurden, zu den einzelnen Zeitpunkten bestimmt.

**Tabelle 12: Abbau von CIT und MIT in einer Dispersionsfarbe durch Zugabe der Abbaureagenzien B1, B2 und B3 im 3-fachen Überschuss**

| **Abbaureagenz** | **CIT-Gehalt in ppm** | | | | **MIT-Gehalt in ppm** | | | |
|---|---|---|---|---|---|---|---|---|
| | **Start** | **24h** | **72h** | **7d** | **Start** | **24h** | **72h** | **7d** |
| Referenz | 8,8 | 8,8 | 8,7 | 7,4 | 3,8 | 3,8 | 3,4 | 3,4 |
| B1 | | <0,1 | <0,1 | <0,1 | | 0,1 | 0,9 | 0,9 |
| B2 | | <0,1 | <0,1 | <0,1 | | 0,7 | 1,1 | 1,4 |
| B3 | | <0,1 | <0,1 | <0,1 | | 0,2 | 0,9 | 0,8 |

Nach 24 Stunden, 72 Stunden und 7 Tagen wurde der Gehalt an CIT und MIT mittel HPLC bestimmt. Als Ausgangswert wurde der Gehalt an CIT und MIT der Farbe vor Zugabe der Abbaureagenzien bestimmt. Zur Referenz wurde auch der CIT und MIT-Gehalt der Farbe, der keine Abbaureagenzien zugesetzt wurden, zu den einzelnen Zeitpunkten bestimmt.

**Tabelle 13: Abbau von CIT und MIT in einer Dispersionsfarbe durch Zugabe der Abbaureagenzien B1, B2 und B3 im 4-fachen Überschuss**

| **Abbaureagenz** | **CIT-Gehalt in ppm** | | | | **MIT-Gehalt in ppm** | | | |
|---|---|---|---|---|---|---|---|---|
| | **Start** | **24h** | **72h** | **7d** | **Start** | **24h** | **72h** | **7d** |
| Referenz | 10,9 | 10,9 | 10,9 | 10,5 | 4,8 | 4,8 | 4,9 | 4,4 |
| B1 | | <0,1 | <0,1 | <0,1 | | 0,1 | 0,2 | 0,3 |
| B2 | | <0,1 | <0,1 | <0,1 | | 0,1 | 1,4 | 1,4 |
| B3 | | <0,1 | <0,1 | <0,1 | | 0,1 | 0,9 | 0,4 |

### Beispiel 2B: Abbau von CIT und MIT in einer Dispersionsfarbe durch Zugabe von Cystein haltigen Lösungen

In jeweils 100g der oben beschriebenen Dispersionsfarbe wurden jeweils 0,3g und 0,4g der Abbaureagenzien unter Rühren hinzu gegeben. Dies entspricht einem Masseverhältnis von CIT/MIT zu (Cystein/Na-Bisulfit) von 1:3 bzw. 1:4.

Nach 24 Stunden, 72 Stunden und 7 Tagen wurde der Gehalt an CIT und MIT mittel HPLC bestimmt. Als Ausgangswert wurde der Gehalt an CIT und MIT der Farbe vor Zugabe der Abbaureagenzien bestimmt. Zur Referenz wurde auch der CIT und MIT-Gehalt der Farbe, der keine Abbaureagenzien zugesetzt wurden, zu den einzelnen Zeitpunkten bestimmt.

**Tabelle14: Abbau von CIT und MIT in einer Dispersionsfarbe durch Zugabe der Abbaureagenzien C1 und C3 im 3-fachen Überschuss**

| **Abbaureagenz** | **CIT-Gehalt in ppm** | | | | **MIT-Gehalt in ppm** | | | |
|---|---|---|---|---|---|---|---|---|
| | **Start** | **24h** | **72h** | **7d** | **Start** | **24h** | **72h** | **7d** |
| Referenz | 16,0 | 16,0 | 15,6 | 15,6 | 4,1 | 4,1 | 4,1 | 4,5 |
| C1 | | <0,1 | <0,1 | <0,1 | | 3,7 | 3,2 | 3,1 |
| C3 | | <0,1 | <0,1 | 0,7 | | 3,1 | 1,9 | 4,0 |

Ein 3-facher Überschuß an den Abbaureagenzien, bezogen auf den CIT und MIT Gesamtgehalt, führt bei den Abbaureagenzien C1 und C3 zu einem unvollständigen MIT-Abbau auf einen Gehalt von 3,1ppm bzw. 4,0ppm. Im Falle von C3 zeigt sich eine Regeneration von MIT nach 7 Tagen gegenüber den niedrigeren 24h und 72h-Werten von 3,1 ppm bzw. 1,9 ppm.

Nach 24 Stunden, 72 Stunden und 7 Tagen wurde der Gehalt an CIT und MIT mittel HPLC bestimmt. Als Ausgangswert wurde der Gehalt an CIT und MIT der Farbe vor Zugabe der Abbaureagenzien bestimmt. Zur Referenz wurde auch der CIT und MIT-Gehalt der Farbe, der keine Abbaureagenzien zugesetzt wurden, zu den einzelnen Zeitpunkten bestimmt.

**Tabelle 15: Abbau von CIT und MIT in einer Dispersionsfarbe durch Zugabe der Abbaureagenzien A1-A3 im 4-fachen Überschuss**

| **Abbaureagenz** | **CIT-Gehalt in ppm** | | | | **MIT-Gehalt in ppm** | | | |
|---|---|---|---|---|---|---|---|---|
| | **Start** | **24h** | **72h** | **7d** | **Start** | **24h** | **72h** | **7d** |
| Referenz | 16,0 | 16,0 | 15,6 | 15,6 | 4,1 | 4,1 | 4,1 | 4,5 |
| C1 | | <0,1 | <0,1 | <0,1 | | 2,9 | 2,8 | 3,9 |
| C3 | | <0,1 | <0,1 | <0,1 | | 2,4 | 1,9 | 4,0 |

Ein 4-facher Überschuß an den Abbaureagenzien, bezogen auf den CIT und MIT Gesamtgehalt, führt bei den Abbaureagenzien C1 und C3 zu einem unvollständigen MIT-Abbau auf einen Gehalt von 3,9 ppm bzw. 4,0ppm nach 7 Tagen. In beiden Fällen zeigt sich eine Regeneration von MIT nach 7 Tagen gegenüber den deutlich niedrigeren 24h und 72h-Werten.

Abbaureagenzien auf Basis von Cystein können MIT nur in geringem Maße abbauen. Ein Reduktion des MIT-Gehaltes auf unter 1,5ppm ausgehend von typisch vorliegenden Ausgangsgehalten von oberhalb 3,5ppm MIT ist mit diesen Abbaureagenzien nicht möglich.

### Beispiel 3:Abbau von CIT und MIT in einer Polymerdispersion durch Zugabe von DMDO- bzw. DMDO/Natriumbisulfit-haltigen haltigen Lösungen

Eine 53% wässrige Polymerdispersion wie oben beschrieben wurde mit ca. 45ppm CIT/MIT konserviert.

In jeweils 100g der Polymeremulsion wurden 0.6g der Abbaureagenzien unter Rühren hinzu gegeben. Dies entspricht einem Masseverhältnis von CIT/MIT zu DMDO von 1:4.

Nach 24 Stunden, 72 Stunden und 7 Tagen wurde der Gehalt an CIT und MIT mittel HPLC bestimmt. Als Ausgangswert wurde der Gehalt an CIT und MIT der Farbe vor Zugabe der Abbaureagenzien bestimmt. Zur Referenz wurde auch der CIT und MIT-Gehalt der Farbe, der keine Abbaureagenzien zugesetzt wurden, zu den einzelnen Zeitpunkten bestimmt.

**Tabelle 16: Abbau von CIT und MIT in einer Polymerdispersion durch Zugabe der Abbaureagenzien A1-A3 im 4-fachen Überschuss**

| **Abbaureagenz** | **CIT-Gehalt in ppm** | | | | **MIT-Gehalt in ppm** | | | |
|---|---|---|---|---|---|---|---|---|
| | **Start** | **24h** | **72h** | **7d** | **Start** | **24h** | **72h** | **7d** |
| Referenz | 31,4 | 31,4 | 31,1 | 27,2 | 13,2 | 13,2 | 12,9 | 13,3 |
| A1 | | <0,1 | <0,1 | <0,1 | | <0,1 | <0,1 | <0,1 |
| A2 | | <0,1 | <0,1 | <0,1 | | 0,1 | 0,2 | 0,2 |
| A3 | | <0,1 | <0,1 | <0,1 | | 0,1 | 0,1 | 0,1 |

Nach 24 Stunden, 72 Stunden und 7 Tagen wurde der Gehalt an CIT und MIT mittel HPLC bestimmt. Als Ausgangswert wurde der Gehalt an CIT und MIT der Farbe vor Zugabe der Abbaureagenzien bestimmt. Zur Referenz wurde auch der CIT und MIT-Gehalt der Farbe, der keine Abbaureagenzien zugesetzt wurden, zu den einzelnen Zeitpunkten bestimmt.

**Tabelle 17: Abbau von CIT und MIT in einer Polymerdispersion durch Zugabe der Abbaureagenzien B1-B3 im 4-fachen Überschuss**

| **Abbaureagenz** | **CIT-Gehalt in ppm** | | | | **MIT-Gehalt in ppm** | | | |
|---|---|---|---|---|---|---|---|---|
| | **Start** | **24h** | **72h** | **7d** | **Start** | **24h** | **72h** | **7d** |
| Referenz | 27,0 | 27,0 | 26,6 | 24,0 | 13,6 | 13,6 | 14,5 | 14,0 |
| B1 | | <0,1 | <0,1 | <0,1 | | <0,1 | <0,1 | <0,1 |
| B2 | | <0,1 | <0,1 | <0,1 | | <0,1 | <0,1 | <0,1 |
| B3 | | <0,1 | <0,1 | <0,1 | | <0,1 | <0,1 | <0,1 |

## Patentansprüche

1. Verfahren zur Herstellung einer wässrigen Zusammensetzung mit einem Gehalt an 2-Methyl-isothiazolin-3-on (MIT) von weniger als 1,5 ppm, **dadurch gekennzeichnet, dass** man eine Isothiazolinon-haltige wässrige Zusammensetzung mit einem Gehalt an dem Isothiazolinon 2-Methylisothiazolin-3-on (MIT) von wenigstens 1,5 ppm durch Zugabe von 3,6-Dioxa-1,8-octan-dithiol (DMDO) ggf. in Kombination mit einem oder mehreren Reduktionsmitteln behandelt, wobei auf 1 ppm in der wässrigen Zusammensetzung enthaltenden Isothiazolinons, wenigstens 2,5 ppm an DMDO und ggf. mitverwendetem Reduktionsmittel eingesetzt wird.

2. Verfahren nach Anspruch 1, **dadurch gekennzeichnet, dass** auf 1 ppm pro in der wässrigen Zusammensetzung enthaltenden Isothiazolinons, wenigstens 2,5 ppm, vorzugsweise 2,8 bis 200 ppm an 3,6-Dioxa-1,8-octan-dithiol (DMDO) ggf. in Kombination mit einem oder mehreren Reduktionsmitteln eingesetzt werden.

3. Verfahren nach Anspruch 1, **dadurch gekennzeichnet, dass** 3,6-Dioxa-1,8-octan-dithiol (DMDO) und wenigstens ein Reduktionsmittel ausgewählt aus der Reihe Natriumbisulfit, Natriummetabisulfit, Natriumsulfit und Natriumthiosulfat, eingesetzt werden.

4. Verfahren nach Anspruch 1, **dadurch gekennzeichnet, dass** die Isothiazolinone der wässrigen Zusammensetzung in Summe zu mehr als 95 Gew.-%, vorzugsweise mehr als 99 Gew.-% aus MIT und ggf. 5-Chlor-2-methyl-4-isothiazolon (CIT) bestehen.

5. Verfahren nach Anspruch 1, **dadurch gekennzeichnet, dass** das 3,6-Dioxa-1,8-octan-dithiol (DMDO) in Kombination mit Natriumbisulfit oder Natriumthiosulfat zugegeben wird.

6. Verfahren nach Anspruch 1, **dadurch gekennzeichnet, dass** 3,6-Dioxa-1,8-octan-dithiol (DMDO) zur Gesamtmenge an wenigstens einem Reduktionsmittel, insbesondere Natriumbisulfit, Natriummetabisulfit, Natriumsulfit und/oder Natriumthiosulfat in einem Gewichtsverhältnis von 5:1 bis 1:5, vorzugsweise von 3:1 bis 1:3, insbesondere 2,5:1 bis 1:2,5 vorliegt.

7. Verfahren nach Anspruch 1, **dadurch gekennzeichnet, dass** das 3,6-Dioxa-1,8-octan-dithiol (DMDO) in Kombination mit Natriumbisulfit, Natriummetabisulfit, Natriumsulfit und/oder Natriumthiosulfat und wenigstens einem Emulgator zugegeben wird.

8. Verfahren nach wenigstem einem der Ansprüche 1 bis 6, **dadurch gekennzeichnet, dass** nach Zugabe von DMDO ggf. in Kombination mit einem oder mehreren Reduktionsmitteln und Reduzierung des MIT Gehalts auf kleiner 1,5 ppm zu der wässrigen Zusammensetzung wenigstens ein Konservierungsmittel ausgewählt aus der Gruppe bestehend aus 1,2-Benzisothiazolin-3-on (BIT), N-Methyl-1,2-benziso-thiazolin-3-on (M-BIT), 2-n-Octylisothiazolin-3-on (OIT), Bronopol, Phenoxyethanol, Natrium-Pyrithion und Zink-Pyrithion hinzugegeben wird.

9. Formulierung enthaltend 3,6-Dioxa-1,8-octan-dithiol (DMDO) und wenigstens ein Reduktionsmittel, vorzugsweise wenigstens eines ausgewählt aus der Reihe Natriumbisulfit, Natriummetabisulfit, Natriumsulfit und Natriumthiosulfat.

10. Formulierung gemäß Anspruch 9, enthaltend 3,6-Dioxa-1,8-octan-dithiol (DMDO) und Natriumbisulfit.

11. Formulierung gemäß Anspruch 9, **dadurch gekennzeichnet, dass** sie 3,6-Dioxa-1,8-octan-dithiol (DMDO) in einer Menge von 0,5 bis 5 Gew-%, bezogen auf die Formulierung, enthält.

12. Formulierung gemäß Anspruch 9, **dadurch gekennzeichnet, dass** sie DMDO und Natriumbisulfit in einem Gewichtsverhältnis von 5:1 bis 1:5, vorzugsweise von 3:1 bis 1:3, insbesondere 2,5:1 bis 1:2,5 enthält.

13. Formulierung gemäß Anspruch 9, **dadurch gekennzeichnet, dass** sie DMDO und das Reduktionsmittel, insbesondere Natriumbisulfit in einer Menge von 1 bis 6 Gew-%, bezogen auf die Formulierung, enthält.

14. Formulierung gemäß Anspruch 9, **dadurch gekennzeichnet, dass** sie eine wässrige Formulierung ist.

15. Formulierung gemäß Anspruch 9, **dadurch gekennzeichnet, dass** sie wenigstens einen Emulgator und/oder wenigstens ein Antioxidationsmittel, insbesondere Ascorbinsäure, und/oder wenigstens ein Entschäumer, insbesondere Hexylalkohol enthält.
